# FASCICULE DE BREVET EUROPEEN

(11) **EP 1 970 813 B1**
(45) Date de publication et mention de la délivrance du brevet: **12.01.2011**
(21) Numéro de dépôt: 07104052.1
(22) Date de dépôt: 13.03.2007
(51) Int. Cl.: G06F 12/14

(54) **Procédé de verrouillage de mots d'une mémoire non volatile dans un dispositif électronique équipé de moyens de communication RF**
Verfahren zur Blockade von Wörtern eines nichtflüchtigen Speichers in einer elektronischen Vorrichtung, die mit RF-Kommunikationsmitteln ausgestattet ist
Method of locking words in a non-volatile memory of an electronic device equipped with radio communication means

(43) Date de publication de la demande: 17.09.2008
(73) Titulaire: EM Microelectronic-Marin SA, 2074 Marin (CH)
(72) Inventeur: Stiglic, M. Maksimilijan, 2000 Maribor (SI)
(74) Mandataire: Surmely, Gérard

(56) Documents cités:
- EP-B1- 0 304 348
- FR-A1- 2 770 327
- US-A- 5 568 634
- US-A- 6 035 401

## Description

### Domaine technique

L'invention concerne un procédé de verrouillage de mots d'une mémoire non volatile dans un dispositif électronique équipé de moyens de communication RF. En particulier, le dispositif électronique est un transpondeur. L'invention concerne également un dispositif électronique agencé pour fonctionner selon le procédé de verrouillage de l'invention. La mémoire non volatile est notamment une mémoire programmable du type EEPROM. Elle est généralement structurée en plusieurs parties auxquelles on peut accéder séparément, soit en écriture, soit en lecture. Ces parties sont formées de plusieurs bits. Chaque partie de la mémoire est définie généralement par une séquence de bits que l'on nomme aussi "mot". Par la suite, on utilisera le terme "mot" pour désigner une partie distincte de la mémoire relativement à l'accès en écriture et/ou en lecture.

### Arrière-plan technologique

Il est connu des transpondeurs équipés d'une mémoire non volatile et structurée en une pluralité de mots. A chaque mot utilisé est généralement attribué un type de données. Certains mots peuvent être réservés au fabricant des transpondeurs, d'autres à un distributeur national et d'autres encore au client final ou utilisateur. Pour protéger soit le contenu de certains mots, soit l'accès en lecture sans autorisation, il est prévu un registre de protection des données. Généralement, ce registre est formé par un mot de protection ayant une pluralité de bits correspondant à une pluralité de mots dont il est prévu de pouvoir verrouiller l'accès de manière individuelle. Le circuit logique est agencé de manière qu'il est possible de verrouiller l'accès à un mot quelconque en changeant l'état logique du bit correspondant dans le mot de protection. Pour plusieurs applications, il est prévu que le verrouillage soit définitif, c'est-à-dire irréversible pour des raisons de sécurité notamment. Ainsi, il est nécessaire d'assurer que le contenu du mot de protection ne puisse être modifié pour les bits correspondant aux mots verrouillés définitivement.

De manière plus générale, notamment comme divulgué dans le document US 5,568,634, il est connu d'associer à une mémoire une table d'allocation des mots ou séquences de bits de cette mémoire. Cette table indique quels mots ou séquence de bits sont déjà utilisés et permet ainsi de gérer l'écriture de mots ou données nouvelles dans la mémoire. Les mots ou séquences de bits déjà écrits correctement dans la mémoire sont signalés « occupés », c'est-à-dire pas disponibles, dans la table d'allocation qui bloque l'accès en écriture à ces parties de la mémoire déjà remplies.

Le procédé d'écriture conventionnel d'un mot programmable d'une mémoire EEPROM comprend généralement une étape préliminaire d'effacement du contenu du mot avant d'écrire le nouveau contenu prévu. Deux situations peuvent engendrer une perte du contenu correct du mot de protection. Premièrement, une erreur lors du traitement du contenu du mot de protection peut survenir de sorte que le contenu après écriture est erroné. Deuxièmement, l'alimentation du transpondeur ou la procédure de verrouillage d'un mot donné peuvent être interrompues juste après que le contenu du mot de protection soit effacé et avant que le nouveau mot modifié en conséquence ne soit écrit dans ce mot de protection. Cette deuxième situation, qui peut arriver fortuitement ou de manière volontaire, pose un sérieux problème de protection des données de la mémoire car alors tous les mots de cette mémoire ont un accès libre. La présente invention a pour but de résoudre le problème de protection des données d'une mémoire non volatile mentionné ci-avant.

### Résumé de l'invention

L'invention concerne un dispositif électronique comprenant une unité logique, une mémoire non volatile et une antenne de communication électromagnétique, la mémoire non volatile comprenant une pluralité de mots distincts dont l'accès est susceptible d'être verrouillé individuellement. Ce dispositif électronique comprend un registre de protection de ladite pluralité de mots qui est formé de deux mots de protection ayant chacun une pluralité de bits de verrouillage correspondant respectivement à la pluralité de mots, les deux mots de protection étant alternativement actif et inactif lors du verrouillage successif des mots de ladite pluralité de mots, le mot de protection actif définissant l'état dudit registre de protection. Un mot quelconque est verrouillé si le bit de verrouillage correspondant de ce registre de protection est dans un premier état logique alors que son accès est libre si ce bit de verrouillage correspondant est dans un deuxième état logique, chaque nouveau verrouillage d'un mot quelconque générant une écriture du nouveau mot de protection résultant dans le mot de protection inactif qui devient ensuite le mot de protection actif dudit registre de protection.

L'invention concerne également un procédé de verrouillage de mots d'une mémoire non volatile d'un dispositif électronique tel que défini ci-avant, caractérisé en ce qu'il comprend les étapes suivantes pour verrouiller un mot X quelconque :
A) Détermination du mot de protection actif, nommé par la suite le premier mot de protection, du registre de protection;
B) Copier le contenu de ce premier mot de protection dans une mémoire vive ou un registre de traitement de données;
C) Mettre le bit correspondant audit mot X, dans ladite mémoire vive ou dans ledit registre de traitement de données, dans le premier état logique ("1 ") et écrire ensuite le contenu résultant de cette mémoire vive ou de ce registre de traitement de données dans le mot de protection inactif, nommé par la suite le second mot de protection.

Selon un mode de mise en oeuvre préféré, le procédé prévoit, suite à l'étape C), de vérifier que l'écriture dans le second mot de protection a été correctement effectuée et, dans le cas contraire, d'effectuer à nouveau soit toute l'étape C), soit l'écriture du contenu de ladite mémoire vive ou dudit registre de traitement de données dans ledit second mot de protection; ceci jusqu'à ce que cette étape d'écriture soit effectuée correctement. Ledit second mot de protection devient suite à cette dernière étape le mot de protection actif.

L'invention concerne encore un procédé de verrouillage de mots d'une mémoire non volatile d'un dispositif électronique tel que défini ci-avant, caractérisé en ce qu'il comprend les étapes suivantes pour verrouiller un mot X quelconque :
A) Détermination du mot de protection actif, nommé par la suite le premier mot de protection, du registre de protection;
B) Copier le contenu dudit premier mot de protection dans le mot de protection inactif, nommé par la suite le deuxième mot de protection;
C) Mettre le bit de verrouillage dudit deuxième mot de protection correspondant audit mot X dans le premier état logique.

Selon une variante préférée de ce dernier procédé, il est prévu de vérifier si l'étape B) a été correctement effectuée et, dans le cas contraire, d'effectuer à nouveau cette étape B) jusqu'à ce qu'elle soit effectuée correctement. On peut également prévoir de vérifier si l'étape C) a été effectuée correctement et, dans le cas contraire, de répéter cette étape C) jusqu'à ce que le bit de verrouillage soit dans le premier état logique.

### Brève description des dessins

La description de modes de mise en oeuvre du procédé selon l'invention et d'un mode de réalisation d'un dispositif électronique selon l'invention est faite ci-après en référence aux dessins, donnés à titre d'exemples nullement limitatifs, dans lesquels :
- la figure 1 est un schéma bloc d'un transpondeur selon l'invention;
- la figure 2 représente un registre de protection de la mémoire du transpondeur de la figure 1; et
- la figure 3 est un diagramme représentatif d'un mode de mise en oeuvre du procédé de l'invention.

### Description détaillée

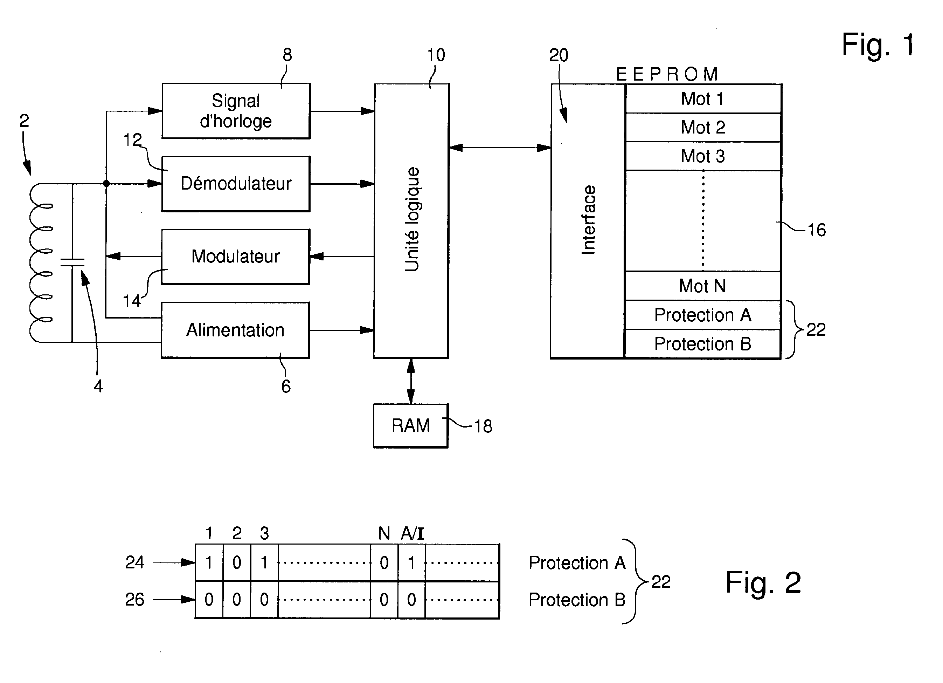

A l'aide des figures 1 et 2 on décrira ci-après un transpondeur selon l'invention. De manière classique, ce transpondeur comprend une antenne de communication électromagnétique 2 agencée en parallèle avec une capacité d'entrée 4. Le transpondeur est du type passif. Il comprend une unité d'alimentation 6 servant à alimenter le transpondeur en redressant le signal électromagnétique reçu par l'antenne 2. Il comprend des moyens 8 permettant d'extraire un signal d'horloge du signal électromagnétique reçu. Ce signal d'horloge est fourni à l'unité logique centrale 10. Le transpondeur comprend encore un démodulateur 12 du signal reçu qui fournit à l'unité logique un signal digital définissant les données reçues par le transpondeur. Pour pouvoir répondre à un signal d'interrogation ou à un signal d'excitation, le transpondeur comprend aussi un modulateur 14.

Le transpondeur comprend en outre une mémoire programmable EEPROM 16 reliée à l'unité logique 10 et une mémoire vive RAM 18 associée à l'unité logique. De manière conventionnelle la mémoire 16 comprend une interface d'entrée 20 et une pluralité de mots 1 à N dans lesquels différents types de données peuvent être écrits. Il est prévu de pouvoir verrouiller l'accès à chaque mot programmable 1 à N de la mémoire non volatile 16. Le verrouillage de l'accès consiste dans le présent cas à interdire de modifier le contenu d'un mot quelconque sélectionné. Pour ce faire, la mémoire 16 comprend un registre de protection 22 agencé pour verrouiller individuellement chaque mot programmable de ladite pluralité de mots 1 à N. Le registre de protection comprend une pluralité de bits de verrouillage correspondant respectivement à la pluralité de mots programmables 1 à N. Un mot programmable quelconque est verrouillé si le bit de verrouillage correspondant du registre de protection est dans un premier état logique donné ("1"), alors que son accès est libre si ce bit de verrouillage correspondant est dans un deuxième état logique ("0").

Selon l'invention, le registre de protection 22 est formé de deux mots de protection A et B ayant chacun une pluralité de bits de verrouillage correspondant respectivement à la pluralité de mots 1 à N. Les deux mots de protection sont alternativement actif et inactif lors du verrouillage successif des mots de la pluralité de mots programmables. L'état du registre de protection est défini par le mot de protection actif. Ainsi, chaque nouveau verrouillage d'un mot programmable quelconque génère une écriture du nouveau mot de protection résultant dans le mot de protection inactif qui devient ensuite le mot de protection actif du registre de protection 22. Ceci sera décrit plus précisément par la suite.

Dans la variante décrite à la figure 2, chaque mot de protection 24, respectivement 26 comprend un bit d'état A/I qui indique si ce mot de protection est actif ou inactif, l'un étant inactif lorsque l'autre est actif. A la figure 2, le premier mot de protection 24 ou A est actif alors que le mot de protection 26 ou B est inactif. Comme représenté à cette figure 2, tous les bits de la pluralité de bits de verrouillage 1 à N du mot de protection inactif 26 sont dans le deuxième état logique "0" avant l'écriture d'un nouveau mot de protection dans ce mot de protection inactif lors d'une procédure de verrouillage d'au moins un mot 1 à N de la mémoire 16.

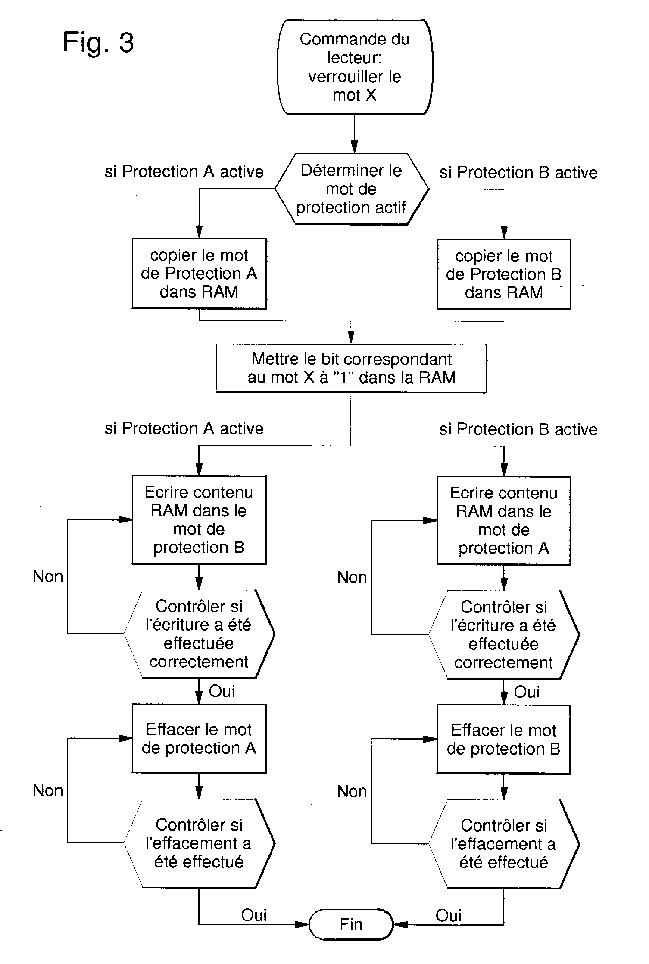

En référence à la figure 3, on décrira ci-après un premier mode de mise en oeuvre du procédé de verrouillage de mots 1 à N de la mémoire 16 du transpondeur décrit ci-avant en référence aux figures 1 et 2.

Le verrouillage d'un mot X dans le transpondeur est engendré par une commande d'un lecteur reçue par ce transpondeur. Par lecteur, on comprend un dispositif capable d'interroger le transpondeur. Il s'agit dans le présent cas d'un émetteur-récepteur. Lorsque le transpondeur reçoit une commande de verrouillage du lecteur, il détermine premièrement quel est le mot de protection actif. Dans la variante du transpondeur décrit précédemment, cette détermination se fait par une lecture du bit d'état A/I d'au moins un des deux mots de protection A et B. En effet, il est possible que seul un des deux mots de protection ait un bit d'état. Dans une autre variante où il n'est pas prévu de bits d'état dans les deux mots de protection A et B, la détermination du mot de protection actif est réalisée en déterminant quel mot parmi les deux mots de protection a le plus de bits dans le premier état logique, c'est-à-dire dans l'exemple décrit l'état logique "1". On notera que d'autres possibilités pour déterminer le mot de protection actif sont envisageables. Dans une variante simplifiée, il est possible de seulement détecter si le mot de protection A comprend des bits de verrouillage dans le premier état logique. Si oui, il est alors considéré comme le mot de protection actif. Dans le cas contraire, il est considéré comme le mot de protection inactif. Cette variante simplifiée est possible seulement dans le cas où le mot de protection inactif est effacé suite à une procédure de verrouillage d'au moins un mot programmable.

Une fois le mot de protection actif déterminé, on copie son contenu dans une mémoire vive RAM ou dans un registre de traitement de données quelconque. Ensuite, il est prévu de mettre le bit correspondant au mot X, dans la mémoire vive RAM ou dans le registre de traitement de données, dans le premier état logique "1". Le contenu résultant de la mémoire vive ou du registre de traitement de données est alors écrit dans le mot de protection inactif. Ensuite, il est prévu une étape de contrôle de la procédure d'écriture précédente dans laquelle on vérifie que ladite écriture dans le mot de protection inactif a été correctement effectuée. Dans le cas contraire, on effectue à nouveau au moins l'étape précédente, c'est-à-dire l'écriture du contenu de la mémoire vive ou du registre de traitement de données dans le mot de protection initialement inactif. On peut dans une variante prévoir d'effectuer à nouveau aussi des étapes antérieures, à savoir la copie du mot de protection actif dans la mémoire vive et également le changement d'état du bit correspondant au mot X dont il est prévu de verrouiller l'accès soit en écriture, soit en lecture. Dans une autre variante encore, on peut seulement contrôler que le contenu dans la mémoire vive est correct avant d'effectuer à nouveau l'étape d'écriture de son contenu dans le mot de protection initialement inactif.

Ensuite, il est prévu d'effacer le contenu du mot de protection initialement actif, lequel est devenu le mot de protection inactif suite à l'écriture réussie du nouveau mot de protection, verrouillant également l'accès au mot X, dans le mot de protection initialement inactif, lequel est devenu suite à la procédure de verrouillage du mot X décrite ici le mot de protection actif du registre de protection.

Dans le procédé selon l'invention décrit à l'aide de la figure 3, il est prévu de contrôler si l'étape d'effacement a été effectuée avec succès. Dans le cas contraire, il est prévu d'effectuer à nouveau l'effacement du mot de protection devenu inactif. On termine ainsi la procédure de verrouillage du mot X dans le transpondeur selon l'invention. Ainsi, les deux mots de protection du registre de protection sont alternativement actif et inactif lors du verrouillage successif des mots de la mémoire non volatile EEPROM du transpondeur.

Dans un deuxième mode de mise en oeuvre du procédé de verrouillage selon l'invention, il est prévu, après avoir déterminé le mot de protection actif, de copier directement le contenu du mot de protection actif dans le mot de protection inactif et ensuite de mettre le bit de verrouillage correspondant au mot à protéger dans le premier état logique "1". Après avoir copié le contenu du mot de protection actif dans le mot de protection inactif, il est prévu dans une variante avantageuse de vérifier que cette étape d'écriture a été effectuée correctement et, dans le cas contraire, d'effectuer à nouveau cette étape d'écriture jusqu'à ce qu'elle soit réalisée avec succès. Ensuite, on peut prévoir d'effacer le contenu du mot de protection initialement actif, lequel devient alors le mot de protection inactif.

Ce deuxième mode du procédé de l'invention de distingue donc essentiellement du premier mode en ce qu'il n'est pas prévu de passer par une mémoire vive RAM ou un registre de traitement de données associé à l'unité logique pour écrire le nouveau mot de protection dans le mot de protection initialement inactif du registre de protection.

On remarquera finalement que l'effacement du mot de protection inactif peut être réalisé soit au début de la procédure de verrouillage d'un mot X quelconque ou directement à la fin d'une telle procédure lorsque le contenu du nouveau mot de protection actif a été vérifié. Le procédé selon l'invention permet ainsi de garantir que le registre de protection de la mémoire d'un transpondeur soit fiable en toute circonstance. Il est impossible de perdre l'état de verrouillage de la mémoire d'un dispositif électronique selon la présente invention. Si la procédure de verrouillage est interrompue pour une raison quelconque ou si le champ d'alimentation est perdu en cours de procédure, l'état logique des bits de verrouillage des mots de la mémoire n'est jamais perdu. En effet aucun effacement n'est prévu avant que l'écriture du nouveau mot de protection ait été effectuée avec succès. Si un problème intervient lors d'une commande de verrouillage d'un mot donné, on peut toujours revenir à l'état précédent et recommencer le verrouillage du mot donné. Ainsi, si un utilisateur a accès à une certaine partie de la mémoire qu'il peut programmer et ensuite verrouiller, il est impossible que cet utilisateur puisse modifier l'état de protection antérieur d'autres parties de la mémoire dont l'accès en écriture et/ou en lecture ne lui est pas autorisé.

## Revendications

1. Dispositif électronique comprenant une unité logique (10), une mémoire non volatile (16) et une antenne de communication électromagnétique (2), ladite mémoire non volatile comprenant une pluralité de mots distincts (1 à N) dont l'accès est susceptible d'être verrouillé individuellement, **caractérisé en ce que** ce dispositif électronique comprend un registre de protection (22) de ladite pluralité de mots qui est formé de deux mots de protection (A et B; 24 et 26) ayant chacun une pluralité de bits de verrouillage (1 à N) correspondant respectivement à la pluralité de mots, les deux mots de protection étant alternativement actif et inactif lors du verrouillage successif des mots de ladite pluralité de mots, le mot de protection actif définissant l'état dudit registre de protection, un mot quelconque (X) étant verrouillé si le bit de verrouillage correspondant de ce registre de protection est dans un premier état logique alors que son accès est libre si ce bit de verrouillage correspondant est dans un deuxième état logique, chaque nouveau verrouillage d'un mot de ladite pluralité de mots générant une écriture d'un nouveau mot de protection résultant dans le mot de protection inactif qui devient ensuite le mot de protection actif dudit registre de protection.

2. Dispositif électronique selon la revendication 1, **caractérisé en ce que** tous les bits de ladite pluralité de bits de verrouillage du mot de protection inactif sont mis dans le deuxième état logique avant ladite écriture dudit nouveau mot de protection dans ce mot de protection inactif.

3. Dispositif électronique selon la revendication 1 ou 2, **caractérisé en ce que**, lors de la génération d'un nouveau mot de protection pour verrouiller ledit mot quelconque (X), le contenu dudit mot de protection actif est transféré dans une mémoire vive (18) ou un registre de traitement de données où le bit correspondant audit mot quelconque et alors mis dans ledit premier état logique ("1"), le contenu de cette mémoire vive ou de ce registre de traitement de données étant ensuite écrit dans le mot de protection inactif, lequel devient ensuite le mot de protection actif.

4. Dispositif électronique selon l'une des revendications précédentes, **caractérisé en ce qu'**au moins un des deux mots de protection comprend un bit d'état qui indique s'il est actif ou inactif, l'un étant inactif lorsque l'autre est actif.

5. Procédé de verrouillage de mots distincts d'une mémoire non volatile d'un dispositif électronique selon la revendication 1, **caractérisé en ce qu'**il comprend les étapes suivantes pour verrouiller un mot X quelconque :
A) Détermination du mot de protection actif, nommé par la suite le premier mot de protection, du registre de protection;
B) Copier le contenu de ce premier mot de protection dans une mémoire vive ou un registre de traitement de données;
C) Mettre le bit correspondant audit mot X dans ladite mémoire vive ou dans ledit registre de traitement de données dans le premier état logique ("1") et écrire ensuite le contenu résultant de cette mémoire vive ou de ce registre de traitement de données dans le mot de protection inactif, nommé par la suite le second mot de protection.

6. Procédé selon la revendication 5, **caractérisé en ce que**, suite à l'étape C), il est prévu l'étape suivante :
D) Vérifier que l'écriture dans le second mot de protection a été correctement effectuée et, dans le cas contraire, effectuer à nouveau soit toute l'étape C), soit l'écriture du contenu de ladite mémoire vive ou dudit registre de traitement de données dans ledit second mot de protection; ceci jusqu'à ce que cette étape d'écriture soit effectuée correctement,
ledit second mot de protection devenant suite à cette étape D) le mot de protection actif.

7. Procédé selon la revendication 6, **caractérisé en ce que**, suite à l'étape D), il est prévu d'effacer le contenu du premier mot de protection qui est alors le mot de protection inactif.

8. Procédé selon l'une des revendications 5 à 7, **caractérisé en ce que** la détermination du mot de protection actif à l'étape A) est effectuée au moyen d'un bit d'état prévu dans au moins un des deux mots de protection du registre de protection.

9. Procédé selon l'une des revendications 5 à 7, **caractérisé en ce que** la détermination du mot de protection actif à l'étape A) est réalisée en déterminant quel mot parmi les deux mots de protection a le plus de bits dans le premier état logique.

10. Procédé de verrouillage de mots distincts d'une mémoire non volatile d'un dispositif électronique selon la revendication 1, **caractérisé en ce qu'**il comprend les étapes suivantes pour verrouiller un mot X quelconque :
A) Détermination du mot de protection actif, nommé par la suite le premier mot de protection, du registre de protection;
B) Copier le contenu dudit premier mot de protection dans le mot de protection inactif, nommé par la suite le deuxième mot de protection;
C) Mettre le bit de verrouillage dudit deuxième mot de protection correspondant audit mot X dans le premier état logique.

11. Procédé selon la revendication 10, **caractérisé en ce qu'**il est prévu de vérifier si l'étape B) a été correctement effectuée, et, dans le cas contraire, d'effectuer à nouveau cette étape B) jusqu'à ce qu'elle soit effectuée correctement.

12. Procédé selon la revendication 10 ou 11, **caractérisé en ce qu'**il est prévu de vérifier si l'étape C) a été effectuée correctement et, dans le cas contraire, de répéter cette étape C) jusqu'à ce que ledit bit de verrouillage soit dans ledit premier état logique.

13. Procédé selon la revendication 11 ou 12, **caractérisé en ce que**, suite à l'étape C), il est prévu d'effacer le contenu dudit premier mot de protection qui est alors le mot de protection inactif.

## Claims

1. Electronic device including a logic unit (10), a non volatile memory (16) and an electromagnetic communication antenna (2), said non volatile memory including a plurality of distinct words (1 to N) whose access can be individually locked, **characterized in that** said electronic device includes a protection register (22) of said plurality of words which is formed of two protection words (A and B; 24 and 26) each having a plurality of lock bits (1 to N) respectively corresponding to the plurality of words, the two protection words being alternately active and inactive during the successive locking of the words of said plurality of words, the active protection word defining the state of said protection register, any word (X) being locked if the corresponding lock bit of said protection register is in a first logic state whereas access thereto is free if said lock bit is in a second logic state, each new locking of one word of said plurality of words generating writing of a resulting new protection word in the inactive protection word which then becomes the active protection word of said protection register.

2. Electronic device according to claim 1, **characterized in that** all the bits of said plurality of inactive word lock bits are set in the second logic state before said new protection word is written in said inactive protection word.

3. Electronic device according to claim 1 or 2, **characterized in that**, when a new protection word is generated to lock said any word (X), the content of said active protection word is transferred into a RAM memory (18) or a data processing register where the active bit corresponding to said any word is then set in said first logic state ("1"), the content of said RAM memory or said data processing register then being written in the inactive protection word, which then becomes the active protection word.

4. Electronic device according to any of the preceding claims, **characterized in that** at least one of the two protection words includes a state bit that indicates whether said word is active or inactive, one word being inactive when the other is active.

5. Method of locking distinct words of a non volatile memory according to claim 1, **characterized in that** it includes the following steps for locking any word X:
A) Determining the active protection word, hereafter the "first protection word", of the protection register,
B) Copying the content of said first protection word into a RAM memory or a data processing register;
C) Setting the bit corresponding to said word X in the RAM memory or in said data processing register in said first logic state ("1 ") and then writing the resulting content of said RAM memory or said data processing register in the inactive protection word, hereinafter the "second protection word".

6. Method according to claim 5, **characterized in that** the following step is provided after step C):
D) Checking whether the write operation has successfully been carried out in the second protection word and, if not, either repeating the entire step C) or writing the content of said RAM memory or said data processing register in said second protection word, until said write step has been correctly carried out,
said second protection word becoming the active protection word after said step D).

7. Method according to claim 6, **characterized in that**, after step D), the content of the first protection word is deleted and said first word is then the inactive protection word.

8. Method according to any of claims 5 to 7, **characterized in that** determination of the active protection word at step A) is carried out by means of a state bit provided in at least one of the two protection words of the protection register.

9. Method according to any of claims 5 to 7, **characterized in that** determination of the active protection word in step A) is achieved by determining which of the two protection words has the most bits in the first logic state.

10. Method of locking distinct words of non volatile memory of an electronic device according to claim 1, **characterized in that** it includes the following steps for locking any word X:
A) Determining the active protection word, hereafter the "first protection word", of the protection register,
B) Copying the content of said first protection word into the inactive protection word, hereafter the "second protection word";
C) Setting the lock bit of said second protection word corresponding to said word X in the first logic state.

11. Method according to claim 10, **characterized in that** a check is made to determine whether step B) has been correctly carried out and, if not, said step B) is repeated until it has been correctly carried out.

12. Method according to claim 10 or 11, **characterized in that** a check is made to determine whether step C) has been correctly carried out and, if not, said step C) is repeated until said lock bit is in said first logic state.

13. Method according to claim 11 or 12, **characterized in that**, after step C), the content of said first protection word is deleted and said first word is then the inactive protection word.

## Patentansprüche

1. Elektronische Vorrichtung umfassend eine Logikeinheit (10), einen nicht flüchtigen Speicher (16) und eine elektromagnetische Kommunikationsantenne (2), wobei der nicht flüchtige Speicher eine Anzahl einzelner Wörter (1 bis N) aufweist, deren Zugang individuell gesperrt werden kann, **dadurch gekennzeichnet, dass** die elektronische Einrichtung ein Schutzregister (22) für die Anzahl der Wörter aufweist, welches von zwei Schutzwörtern (A und B; 24 und 16) gebildet wird, von denen jedes eine Anzahl an Sperrbits (1 bis N) aufweist, die entsprechend mit der Anzahl der Wörter korrespondieren, wobei die zwei Schutzwörter abwechselnd aktiv und inaktiv bei einer aufeinanderfolgenden Sperrung der Wörter der besagten Anzahl der Wörter sind, wobei das aktive Schutzwort einen Zustand des besagten Schutzregisters definiert, und ein beliebiges Wort (X) gesperrt ist, wenn das korrespondierende Sperrbit des Schutzregisters in einem ersten logischen Zustand ist, während sein Zugriff frei ist, wenn das korrespondierende Sperrbit in einem zweiten logischen Zustand ist, wobei jede erneute Sperrung eines Worts der Anzahl der Wörter die Erstellung eines neuen Schutzwortes generiert, die aus dem inaktiven Schutzwort resultiert, welches nachfolgend das aktive Schutzwort des Schutzregisters wird.

2. Elektronische Einrichtung nach Anspruch 1, **dadurch gekennzeichnet, dass** sämtliche Bits der Anzahl an Sperrbits des inaktiven Schutzworts vor einer Erstellung des neuen Schutzworts in das inaktive Schutzwort in den zweiten logischen Zustand versetzt werden.

3. Elektronische Einrichtung nach Anspruch 1 oder 2, **dadurch gekennzeichnet, dass** bei Erzeugung eines neuen Schutzworts zum Sperren des beliebigen Worts (X) der Inhalt des aktiven Schutzworts in einen flüchtigen Speicher (18) oder in ein Daten-Arbeitsregister transferiert wird, in welchem das mit dem beliebigen Wort korrespondierende Bit schließlich in den ersten logischen Zustand ("1") versetzt wird, der Inhalt des flüchtigen Speichers oder des Daten-Arbeitsregisters danach in das inaktive Schutzwort geschrieben wird, welches danach das aktive Schutzwort wird.

4. Elektronische Einrichtung nach einem der vorhergehenden Ansprüche, **dadurch gekennzeichnet, dass** zumindest eines der Schutzwörter ein Zustandsbit aufweist, welches anzeigt, ob es aktiv oder inaktiv ist, wobei eines inaktiv ist, wenn das andere aktiv ist.

5. Verfahren zum Sperren einzelner Wörter eines nicht flüchtigen Speichers einer elektronischen Einrichtung nach Anspruch 1, **dadurch gekennzeichnet, dass** es die nachfolgenden Schritte zum Sperren eines beliebigen Worts X aufweist:
A) Bestimmung des aktiven Schutzworts, nachfolgend als erstes Schutzwort bezeichnet, des Schutzregisters;
B) Kopieren des Inhalts des ersten Schutzwortes in einen flüchtigen Speicher oder in ein Daten-Arbeitsregister;
C) Setzen des mit dem Wort X korrespondierenden Bits in den flüchtigen Speicher oder in das Daten-Arbeitsregister in einen ersten logischen Zustand ("1") und nachfolgendes Schreiben des resultierenden Inhaltes des flüchtigen Speichers oder des Daten-Arbeitsregisters in das inaktive Wort welches nachfolgend als das zweite Schutzwort bezeichnet wird.

6. Verfahren nach Anspruch 5, **dadurch gekennzeichnet, dass** im Anschluss an Schritt C) der nachfolgende Schritt vorgesehen ist:
D) Überprüfen ob das Schreiben in das zweite Schutzwort korrekt durchgeführt wurde und, im entgegengesetzten Fall, erneutes Durchführen des gesamten Schrittes C), d. h. Schreiben des Inhalts des flüchtigen Speichers oder des Datenarbeitsregisters in das zweite Schutzwort, solange bis der Schritt des Schreibens korrekt durchgeführt ist,
das zweite Schutzwort im Anschluss an den Schritt D) zum aktiven Schutzwort wird.

7. Verfahren nach Anspruch 6, **dadurch gekennzeichnet, dass** im Anschluss an Schritt D) vorgesehen ist, den Inhalt des ersten Schutzwortes, welches schließlich das inaktive Schutzwort ist, zu löschen.

8. Verfahren nach einem der Ansprüche 5 bis 7, **dadurch gekennzeichnet, dass** die Bestimmung des aktiven Worts im Schritt A) mittels eines Zustandsbits durchgeführt wird, welches zumindest in einem der zwei Schutzwörter des Schutzregisters vorgesehen ist.

9. Verfahren nach einem der Ansprüche 5 bis 7, **dadurch gekennzeichnet, dass** die Bestimmung des aktiven Schutzwortes im Schritt A) durch Bestimmung desjenigen Wortes der beiden Schutzwörter verwirklicht wird, welches die meisten Bits im ersten Logikzustand aufweist.

10. Verfahren zum Schützen von bestimmten Wörtern eines nicht flüchtigen Speichers einer elektronischen Einrichtung nach Anspruch 1, **dadurch gekennzeichnet, dass** es die nachfolgenden Schritte zum Sperren eines beliebigen Worts X aufweist:
A) Bestimmung des aktiven Schutzworts, nachfolgend als erstes Schutzwort bezeichnet, des Schutzregisters;
B) Kopieren des Inhalts des ersten Schutzworts in ein inaktives Schutzwort, nachfolgend als zweites Schutzwort bezeichnet;
C) Setzen des Sperrbits des zweiten, mit dem Wort X korrespondierenden Schutzworts in den ersten Logikzustand.

11. Verfahren nach Anspruch 10, **dadurch gekennzeichnet, dass** es zum Überprüfen ausgebildet ist, ob der Schritt B) korrekt durchgeführt wurde, und, im entgegengesetzten Fall, den Schritt B) erneut durchzuführen bis er korrekt durchgeführt wurde.

12. Verfahren nach Anspruch 10 oder 11, **dadurch gekennzeichnet, dass** vorgesehen ist, zu überprüfen, ob der Schritt C) korrekt durchgeführt wurde und, im entgegengesetzten Fall, den Schritt C) zu wiederholen, bis das Sperrbit im ersten Logikzustand ist.

13. Verfahren nach Anspruch 11 oder 12, **dadurch gekennzeichnet, dass** anschließend an Schritt C) vorgesehen ist, den Inhalt des ersten Schutzworts, welches nun das inaktive Schutzwort ist, zu löschen.
